# EUROPEAN PATENT APPLICATION

(11) **EP 2 656 912 A1**
(43) Date of publication of application: **30.10.2013**
(21) Application number: 12002967.3
(22) Date of filing: 26.04.2012
(51) Int. Cl.: B01J 23/38, B01J 35/00, C01B 3/02, B01J 21/06

(54) **Photocatalyst, method for preparation, photolysis system**

(71) Applicant: Saudi Basic Industries Corporation, Riyadh 11422 (SA)
(72) Inventor: Idriss, Hicham, 11422 Riyadh (SA); Khaja, Ahmed Wahab, 11422 Riyadh (SA); Odedairo, Taiwo, 11422 Riyadh (SA); Mussa, Majed Mohammed, 11422 Riyadh (SA)
(74) Representative: Modiano, Micaela Nadia

(57) **Abstract**

The present invention relates to a photocatalyst for the generation of diatomic hydrogen from a hydrogen containing precursor under the influence of actinic radiation comprising a semiconductor support with one or more noble and/or transition metal(s) deposited on said semiconductor support, wherein said metal is covered at least in part with a layer of the semiconductor support. Further disclosed is a method for preparing such catalyst and a method for generating diatomic hydrogen by photolysis.

## Description

The present invention relates to a photocatalyst for the generation of diatomic hydrogen from a hydrogen containing precursor under the influence of actinic radiation, comprising a semiconductor support with one or more noble and/or transition metal(s) deposited on said semiconductor support.

The present invention further relates to a method for preparation of such catalysts, a photolysis system and to a method for generating diatomic hydrogen from hydrogen containing precursors.

Energy and environmental issues at a global level are important topics and to that extent focus has been on the generation of clean energy for some time. Hydrogen in its diatomic form as an energy carrier has the potential to meet at least in part the global energy needs. As a fuel, hydrogen boasts great versatility from direct use in internal combustion engines, gas turbines or fuel cells for both distributed heat and electricity generation needs. As a reacting component, hydrogen is used in several industrial chemical processes, such as for example the synthesis methanol, higher hydrocarbons and ammonia.

Unfortunately hydrogen is not naturally available in abundance in its diatomic form (H₂, also referred to as molecular hydrogen or diatomic hydrogen). Rather, due to its high reactivity, hydrogen is more commonly bonded to other elements, for example oxygen and/or carbon, in the form of water and hydrocarbons. The generation of diatomic hydrogen from these compounds is in contention with the laws of thermodynamics and therefore requires additional energy to break these naturally occurring bonds.

When diatomic hydrogen is reacted with oxygen the energy stored within the H-H bond is released while producing water (H₂O) as the end product. This, combined with the energy density of hydrogen of about 122 kJ/g gives clear advantages for the use of diatomic hydrogen as a fuel.

At present diatomic hydrogen is produced mainly from fossil fuels, biomass and water. Although the technique of diatomic hydrogen production by steam reforming of natural gas is mature it cannot guarantee long-term strategy for a hydrogen economy because it is neither sustainable nor clean. The diatomic hydrogen production through the electrolysis of water is not an energy efficient process as diatomic hydrogen obtained through this process carries less energy than the energy input that is needed to produce it.

Thus, research has focused on the development of new methods to produce hydrogen from renewable resources. Biomass is considered a renewable energy source because plants store solar energy through photosynthesis processes and can release this energy when subjected to an appropriate chemical process, i.e. biomass burning. In this way, biomass functions as a sort of natural energy reservoir on earth for storing solar energy.

The worldwide availability of solar energy is said to be about 4.3 x 10²⁰ J/h , corresponding to a radiant flux density of about 1000 W/m². About 5% of this solar energy is believed to be UV radiation with a light energy of above 3eV. An advantageous method of storing this solar energy is through the generation of diatomic hydrogen. To that extent solar energy may be used in the photocatalysis of water or biomass products such as bio-ethanol into diatomic hydrogen.

Photocatalysis was first reported by Fujishima and Honda (Electrochemical Photolysis of Water at a Semiconductor Electrode, A. Fujishima and K. Honda, Nature, 1972, 238, 37). Since then numerous photocatalysts have been reported both in patent and scientific literature. A summary is provided by Kudo and Miseki (Heterogeneous photocatalyst materials for water splitting, A. Kudo, Y. Miseki, Chem. Soc. Rev., 2009, 38, 253-278). Others have reported that TiO₂ is the most photo catalytically active natural semiconductor known and that efficient use of sunlight can be obtained by modifying TiO₂ with noble metals, doping TiO₂ with other ions, coupling with other semiconductors, sensitising with dyes, and adding sacrificial reagents to the reaction solution (Nadeem et al., The photoreaction of TiO2 and Au/TiO2 single crystal and powder with organic adsorbates, Int J. Nanotechnol., Vol. 9, Nos. 1/2, 2012; Photocatalytic hydrogen production from ethanol over Au/TiO2 anatase and rutile nanoparticles, Effect of Au particle size, M. Murdoch, G.W.N. Waterhouse, M.A. Nadeem, M.A. Keane, R.F. Howe, J. Llorca, H. Idriss*, Nature Chemistry, 3, 489-492 (2011); The Photoreaction of TiO2 and Au/TiO2 single crystal and powder Surfaces with organic adsorbates. Emphasis on hydrogen production from renewable. K. A. Connelly and H. Idriss*, Green Chemistry, 14 (2), 260-280 (2012)).

A problem related to known photocatalysts is that they will not only actively generate hydrogen, but also actively react hydrogen and oxygen. This has the effect that the water photolysis may be followed by a reverse reaction of hydrogen and oxygen into water so that the overall rate of diatomic hydrogen generation is reduced. For example, when a photocatalyst supporting platinum is suspended in water and the suspension is irradiated with light, the hydrogen and oxygen which are generated through photolysis will mix before they leave the catalyst in the form of separate bubbles. The mixed hydrogen and oxygen may contact and react with the platinum and form water again. Hence only a relatively small amount of hydrogen and oxygen can be obtained.

In order to solve and/or compensate for this problem processes have been proposed for increasing the contact between light and the photocatalyst by dispersing powdery semiconductor photo catalysts in water and shaking the entire reaction apparatus. This shaking requires the use of mechanical energy so that the amount of energy used to generate hydrogen may be higher than the amount of energy that is obtained in the form of diatomic hydrogen.

Another solution that has been proposed is to place a photocatalyst on a water-absorbing material, and dampening the surface by impregnating the water-absorbing material with water, then irradiating the surface with light from above. A problem associated with this solution is that the photocatalyst disperses only on the surface of the water-absorbing material leading to inefficient use of the photocatalyst.

The solution proposed in US 2009/0188783 overcomes the aforementioned problems and proposes a photolysis system which comprises a casing into which incident light can enter from the outside and a photolytic layer which is disposed inside the casing; wherein the photolytic layer has a light-transmissive porous material and a photocatalyst supported on the porous material; a water layer containing water in its liquid state is placed below the photolytic layer via a first space; a sealed second space is formed above the photolytic layer in the casing. In the proposed configuration, vapor generated from the water layer is introduced into the photolytic layer via the first space and the vapor is decomposed into hydrogen and oxygen by the photocatalyst, which is excited by the light.

A problem associated with the solution of US 2009/0188783 is that it requires a relatively complex photolysis system which may be cost ineffective.

An object of the present invention is to provide a photocatalyst for the generation of diatomic hydrogen from a hydrogen containing precursor that provides a good yield in terms of diatomic hydrogen generation.

A further object of the present invention is to provide a photocatalyst for the generation of diatomic hydrogen from a hydrogen containing precursor in its liquid state.

A further object of the present invention is to provide a photocatalyst for the generation of diatomic hydrogen from hydrogen containing precursors that prevents or at least limits the reverse reaction of hydrogen and oxygen to water during photolysis.

To that extent the present invention is directed to a photocatalyst for the generation of diatomic hydrogen from a hydrogen containing precursor under the influence of actinic radiation comprising a semiconductor support with one or more noble and/or transition metal(s) deposited on said semiconductor support, wherein said metal is covered at least in part with a layer of the semiconductor support.

The present inventors have surprisingly found that when the surface of the noble and/or transition metal is covered at least in part by a layer of the semiconductor support material the diatomic hydrogen generation is increased when compared with similar catalysts wherein the metal is not or to a lesser extent covered by such a layer.

Hence when the catalyst according to the present invention is employed in a photolysis system at least one of the objectives is met.

Without willing to be bound to it the present inventors believe that the photocatalytic conversion of water and/or alcohols into diatomic hydrogen is not strictly sensitive to the surface of the metal as per thermal catalytic reactions, but rather depends more on the bulk structure of the catalyst, including also the semiconductor support.

As such the present inventors found that the presence of a thin layer of semiconductor support on the noble and/or transition metal does not adversely affect, in fact enhances, the generation of diatomic hydrogen.

The semiconductor support as used in the photocatalyst according to the present invention preferably consists of support particles. The skilled person will understand that the smaller the particles the higher the surface area of the photocatalyst will be. As such, the preferred BET surface area is at least 3, preferably at least 10 m²/gram catalyst, more preferably at least 30 m²/g catalyst. In an embodiment the BET surface area is from 30 - 60 m²/gram catalyst. The term "BET surface area" is a standardized measure to indicate the specific surface area of a material which is very well known in the art. Accordingly, the BET surface area as used herein is measured by the standard BET nitrogen test according to ASTM D-3663-03, ASTM International, October 2003.

The material which is preferably used for the semiconductor support is TiO₂, SrTiO₃, a mixture of TiO₂ and SrTiO₃, a mixture of TiO₂ and CeO₂, a mixture of SrTi0₃ and CeO₂ and a mixture of TiO₂ SrTiO₃ and CeO₂. Preferably the semiconductor support predominantly consists of these materials, meaning that at least 90%, preferably at least 95%, more preferably 99% of the semiconductor support consists of said material. In an embodiment where the semiconductor support is in the form of particles the photocatalyst may comprise a mixture of semiconductor support particles, wherein the support particles consist predominantly of one of the above mentioned materials yet wherein particles mutually differ in the predominant material.

For the avoidance of doubt it should be understood that the components in the semiconductor support particles comprised of a mixture of TiO₂ and SrTiO₃, TiO₂ and CeO₂ SrTiO₃ and CeO₂ TiO₂ and SrTiO₃ and CeO₂ are physically inseparable and should not to be confused with semiconductor supports wherein the components form merely a physical mixture, such as those obtained by merely mixing the components.

In a preferred embodiment of the photocatalyst according to the present invention the layer of semiconductor support material has a thickness in the range from 1 to 5 nm, preferably of from 1 to 3 nm, more preferably of from 1 - 2 nm. The present inventors have observed that only a small layer of semiconductor support is needed in order to arrive at a higher diatomic hydrogen generation rate.

In a preferred embodiment of the present invention the one or more noble and/or transition metal(s) is deposited in the form of metal particles wherein an average major axis direction length of said metal particles, as determined by transmission electron microscopy, is at most 5 nm. The skilled person will understand that the deposited metal particles may not be perfectly spherical or circular in shape. Hence, a major axis length as used herein is to be understood as meaning the maximum axis length of the particle. The average major axis length is a numerical average. The metal particles in the photocatalyst of the present invention preferably have a major axis length of 15nm at most.

Preferably the one or more noble and/or transition metal(s) is/are selected such that it has a Plasmon loss in the range from 500nm to 600nm as determined by UV-Vis reflectance absorption. Although the mechanism is not fully understood the present inventors believe that a Plasmon loss in this range enhances the photoreaction.

The one or more noble and/ or transition metal(s) may be selected from the group consisting of platinum, rhodium, gold, ruthenium, palladium and rhenium. For the avoidance of doubt it should be understood that the noble and/or transition metal particles in the photocatalyst of the present invention may also consist of a mixture of two or more of the above mentioned noble and/or transition metals.

In the photocatalyst of the present invention the noble and/or transition metals are preferably present for at least 75wt%, preferably at least 95 wt% in their non-oxidised state. Non-oxidised means that the noble and/or transition metal is in its pure metal state hence not bound to any oxidising material such as oxygen. It should be understood that this condition is preferred when the photocatalyst is used for the first time and/or after having been exposed to oxygen for some time between photolysis reactions. When the noble and/or transition metals are in an oxidised state their activity is lower. The present inventors nevertheless have found that, in the embodiment where the noble and/or transition metal is in an oxidised state, the activity of the photocatalyst will improve upon its use. A possible reason for this being that the hydrogen which is generated will reduce the oxidised particles during the photolysis. In order to increase the activity, the photocatalysts according to the present invention may be exposed to reducing conditions prior to being used in photolysis.

The amount of noble and/or transition metal in the photocatalyst of the present invention is preferably present in the range from 0.1 to 10 wt%, preferably from 0.4 to 8 wt%.

Preferably the layer of the semiconductor support covers at least 50%, preferably at least 80%, more preferably at least 95% of the noble and/or transition metal. The better the noble and/or transition metal is covered with the semiconductor support the higher the generation of diatomic hydrogen will be. The present inventors rely on the Strong Metal Surface Interaction (SMSI) phenomenon in preparing the photocatalysts of the present invention. The skilled person is well aware of the SMSI phenomenon, wherein support oxides, such as TiO₂ may cover at least a part of the surface of for example platinum particles deposited on said support. SMSI may start when such a support is subjected to a temperature of at least 300°C. In general SMSI is regarded as problematic for catalytic activity. However the present inventors have surprisingly found that photocatalytic activity is enhanced by the effect. As such the present inventors have found a way to use the SMSI in an advantageous manner.

Depending however on the type of support and type of noble and/or transition metals the conditions for preparation of the photocatalyst may be such that the covering process of the noble and/or transition metal also results in decrease of the surface area of the catalyst. In addition the noble and/or transition metal particles size may be enlarged by the heat treatment. These side-effects may result in lower generation rates for diatomic hydrogen, and therefore the skilled person will understand that there will be a trade-off between preservation of surface area on the one hand and increase in coverage of the noble and/or transition metal with the semiconductor support on the other.

The photocatalyst according to the present invention can be prepared according to a method comprising the steps of
i) Preparing and/or providing a semiconductor support with a noble and/or transition metal deposited thereon,
ii) heating said support at a temperature in the range from 300°C to 800 °C for a period sufficient to cover the deposited noble and/or transition metal at least in part with a layer of semiconductor support having a thickness of from 1 to 5 nm.

Preferably the semiconductor support consists of support particles predominantly consisting of materials selected from the group consisting of TiO₂, SrTiO₂, a mixture of TiO₂ and SrTiO₃, a mixture of TiO₂ and CeO₂ a mixture of SrTiO₃ and CeO₂, and a mixture of TiO₂, SrTiO₃ and CeO₂. The present inventors have found that these materials are susceptible, in combination noble and/or transition metals, to the SMSI phenomenon so that in step ii) the semiconductor support material will cover at least in part the surface of the noble and/or transition metal. Preferably at least 50%, more preferably at least 75% of the surface of the noble and/or transition metal is covered. Ideally the whole surface of the noble and/or transition metal is covered. The method as proposed by the present inventors relies on the SMSI effect. However the skilled person will understand that the present invention is not limited to photocatalysts prepared in this manner and that there may be further routes of arriving at the same or similar photocatalysts.

Preferably the support is heated in step ii) for a period of from 1 to 24 hours.

Preferably the heating is carried out in an inert or reducing atmosphere. A reducing atmosphere is preferred as this will also result in a reduction of noble and/or transition metals present in an oxidised state.

Photocatalysts obtained by the method of the invention may be used in the photolysis of hydrogen containing precursors.

Diatomic hydrogen may be generated from a hydrogen containing precursor by contacting a photocatalyst according to the present invention with the hydrogen containing precursor while exposing the photocatalyst to actinic radiation.

The term hydrogen containing precursor as used herein is to be understood as meaning a compound containing chemically (i.e. covalently or ionically) bonded hydrogen atoms and which compound may successfully be used as a raw material for the photocatalytic generation of diatomic hydrogen. Hydrogen containing compounds that do not result in the photocatalytic generation of diatomic hydrogen are not to be considered as hydrogen containing precursors.

The hydrogen containing precursor as used in the photocatalytic process according to the present invention are preferably selected from the group consisting of water, alcohols and mixtures of water and alcohol(s). In other words, the hydrogen containing precursor may be a single chemical compound or a mixture of at least two chemical compounds. For the reason of readily availability it is preferred that the hydrogen containing precursor is a mixture of water and ethanol wherein the amount of ethanol is from 1 % to 95% by weight, preferably from 30% to 95% by weight, more preferably from 60% to 95% by weight. Ideally ethanol originating from biomass is used. The present invention also allows photocatalytic generation of diatomic hydrogen from pure (i.e. 100%) ethanol or very high purity solutions thereof (i.e. solutions containing at least 99 wt% ethanol). Other alcohols, such as methanol and propanol may also be used. The present inventors believe that the generation of diatomic hydrogen is not limited to water and alcohols, but that other hydrogen containing materials such as for example sugars may also be successfully employed.

Actinic radiation as used herein is to be understood to mean radiation that is capable of bringing about the generation of diatomic hydrogen according to the aforementioned method for generating diatomic hydrogen. To that extent the actinic radiation will have at least a portion in the UV wavelength range being defined herein as from 10nm to 400nm. Preferably UV radiation in the range from 300nm to 400nm is used. Actinic radiation having a wavelength of less than 300nm was found to be impractical in the context of the present invention. The photonic energy of the actinic radiation has to match at least the band gap energy. The radiant flux density, sometimes referred to as intensity, is preferably in the range from 0.3 mW/cm² to 3.0 mW/cm², more preferably about 1 mW/cm². Depending on season and geographical location this intensity is close to the UV intensity provided by sunlight, meaning that the photocatalytic formation of diatomic hydrogen can be carried out in a sustainable manner if sunlight is used.

The photocatalyst according to the present invention may be used in any photolysis system for the generation of diatomic hydrogen from a hydrogen containing precursor. Generally such systems comprise a reaction zone where the actual generation of diatomic hydrogen occurs and one or more separation zones for separating the diatomic hydrogen from other gasses that may be formed or are otherwise present. The systems that may be used includes photolysis systems where the photocatalyst is contacted with the hydrogen containing precursor in its liquid state but also systems where the photocatalyst is contacted with hydrogen containing precursors in its gaseous state, such as for example disclosed in US 7,909,979. A combination system where diatomic hydrogen is formed from hydrogen containing precursors both in the liquid state as in the gaseous state is considered as a possible embodiment of the present invention, which would allow the use of a mixture hydrogen containing precursors having mutually different vapor tensions.

The present invention will now be explained by the following non-limiting examples.

### Catalyst preparation

Catalysts were prepared by the sol-gel methods as known by the skilled person. Catalysts having a support of strontium titanate and titanium dioxide were prepared as follows: TiCl₄ was added to a strontium-nitrate solution in appropriate amounts to make either strontium titanate (SrTiO₃) or strontium titanate with excess titanium oxide (TiO₂). After the addition of TiCl₄ to the strontium nitrate solution the pH was raised with sodium hydroxide to a value of between 8 and 9 at which pH value strontium hydroxide and titanium hydroxide precipitated.

The precipitate was left to stand for about 12 hours at room temperature to ensure completion of the reaction after which it was filtered and washed with de-ionized water until neutral pH (-7). The resulting material was then dried in an oven at 100°C for a period of at least 12 hours. Next the material was calcined at a temperatures in the range from 500°C to 800°C. X-ray diffraction techniques were used to indicate formation of SrTiO₃ alone or a mix of SrTiO₃ (perovskite) and TiO₂ (rutile and/or anatase).

The noble and/or transition metals were introduced from their precursors such as RhCl₃/HCl, PtCl₄/H₂O, PdCl₂/HCl, RuCl₃, etc. onto the semiconductor support. The solution was kept at about 60°C under stirring until a paste formed.

Different preparations were conducted in which the HCl concentration was changed between 0.1 and 1 N. The paste was then dried in an oven at 100°C for a period of at least 12 hours followed by heating at a temperature in the range from 350°C to 800°C.

Bimetals, i.e. a mixture of two noble and/or transition metals, were deposited in a co-impregnation methods whereby both metal precursors were added instead of only one. They were subjected to the same process of the monometallic photocatalysts preparation.

### Photolysis

Prior to the photolysis the catalysts were reduced with hydrogen at a temperature in the range from 300 to 500°C.

Next, 10 to 50 mg of catalyst were introduced into a Pyrex reactor with a total volume of between 100 and 250 ml. After purging with nitrogen, 10 to 20 ml of water and/or ethanol were introduced into the reactor. This was followed by further purging with nitrogen to degas the water and/or ethanol solutions.

The reaction was started by exposing the suspension to UV light of intensity between 0.5 and 2 mW/cm². The wavelength of the UV light was about 360 nm.

Extraction of the gas formed was conducted using a syringe. The extracted gas was analyzed using a gas chromatography device equipped with a thermal conductivity detector.

By varying the heating step different catalysts were made as per Table 1.

**Table 1**

| | Catalyst | BET | Heating conditions | | H₂ Generation rate (95wt% ethanol in water) | |
|---|---|---|---|---|---|---|
| | [-] | [m² / g cat.] | [°C] | [hr] | [mol/ g cat.min] | [mol/ m² cat min] |
| I | 1wt% Pt SrTiO₃ | 63^{a} | 300 | 5 | 2 x 10⁻⁶ | 3.2 x 10⁻⁸ |
| II | 1wt% Pt SrTiO₃ | 4^{b} | 500 | 5 | 0.3 x 10⁻⁶ | 7.5 x 10⁻⁸ |
| III | 1wt% Pt SrTiO₃ | 5^{a} | 800 | 5 | 0.9 x 10⁻⁶ | 18 x 10⁻⁸ |
| | | | | | H₂ Generation rate (water) | |
| IV | 3wt% Au TiO₂ | 86^{a} | 300 | 10 | 1.1 x 10⁻⁶ | 1.2 x 10⁻⁸ |
| V | 3wt% Au TiO₂ | 86^{c} | 600 | 10 | 1.7 x 10⁻⁶ | 2 x 10⁻⁸ |
| | | | | | | |

| | | | | | | |
|---|---|---|---|---|---|---|
| (a) Made with a sol gel method (b) Made from SrTiO₃ microcrystals (c) Assumed value; the actual BET surface area was not measured | | | | | | |

## Claims

1. A photocatalyst for the generation of diatomic hydrogen from a hydrogen containing precursor under the influence of actinic radiation comprising a semiconductor support with one or more noble and/or transition metal(s) deposited on said semiconductor support, wherein said metal is covered at least in part with a layer of the semiconductor support.

2. The photocatalyst according to claim 1 wherein the semiconductor support predominantly consists of a materials selected from the group consisting of TiO₂, SrTiO₃, a mixture of TiO₂ and SrTiO₃, a mixture of TiO₂ and CeO₂, a mixture of SrTiO₃ and CeO₂, and a mixture of TiO₂, SrTiO₃ and CeO₂.

3. The photocatalyst according to one or more of preceding claims 1 - 2 wherein the layer has a thickness of from 1 to 5 nm, preferably of from 1 to 3 nm, more preferably of from 1 - 2 nm.

4. The photocatalyst according to one or more of the preceding claims 1 - 3 wherein the one or more noble and/or transition metal(s) is selected such that it has a Plasmon loss in the range from 500nm to 600nm as determined by UV-Vis reflectance absorption.

5. The photocatalyst according to one or more of the preceding claims 1 - 4 wherein the one or more noble and/or transition metal(s) is selected from the group consisting of platinum, rhodium, ruthenium, palladium, rhenium and gold.

6. The photocatalyst according to one or more of the preceding claims 1 - 5 wherein the noble and/or transition metal(s) is present in an amount in the range from 0.1 to 10 wt%, preferably from 0.4 to 8wt%.

7. The photocatalyst according to one or more of the preceding claims 1 - 6 wherein at least 50%, preferably at least 80%, more preferably at least 95% of the noble and/or transition metal is covered with a layer of the semiconductor support.

8. A method for preparing a photocatalyst according to one or more of claims 1 - 7, comprising the steps of
iii) Preparing and/or providing a semiconductor support with a noble and/or transition metal deposited thereon,
iv) heating said support at a temperature in the range from 300°C to 800 °C for a period sufficient to cover the noble and/or transition metal at least in part with a layer of semiconductor support having a thickness of from 1 to 5 nm.

9. The method according to claim 8 wherein the period wherein the support is heated is from 1 to 24 hours.

10. The method according to one or more of preceding claims 8 - 9 wherein the heating is carried out in an inert or reducing atmosphere.

11. Photocatalyst obtainable by the method of claim 8.

12. A method for generating diatomic hydrogen from a hydrogen containing precursor comprising contacting a photocatalyst according to one or more of the preceding claims 1 - 7 or 11 with the hydrogen containing precursor while exposing the photocatalyst to actinic radiation.

13. The method according to claim 12 wherein the hydrogen containing precursor is selected from the group consisting of water, alcohols and mixtures of water and one or more alcohol(s).

14. The method of one or more of preceding claims 12 - 13 wherein the hydrogen containing precursor is a mixture of water and ethanol and wherein the amount of ethanol is from 1% to 95% by weight, preferably from 30% to 95% by weight, more preferably from 60% to 95% by weight.

15. Photolysis system for the generation of diatomic hydrogen from a hydrogen containing precursor comprising a reaction zone containing a photocatalyst according to any one or more of preceding claims 1 - 7 or 11.

16. Use of the photocatalyst according to any one or more of the preceding claims 1 - 7 or 11 for the generation of diatomic hydrogen from a hydrogen containing precursor under the influence of actinic radiation.

17. Use of a catalyst comprising a TiO₂ support and a noble and/or transition metal deposited thereon, said metal being covered at least in part with a layer of said support, as a photocatalyst for the generation of diatomic hydrogen from a hydrogen containing precursor.
